# EUROPÄISCHE PATENTSCHRIFT

(11) **EP 1 180 909 B1**
(45) Veröffentlichungstag und Bekanntmachung des Hinweises auf die Patenterteilung: **21.04.2010**
(21) Anmeldenummer: 01114959.8
(22) Anmeldetag: 20.06.2001
(51) Int. Cl.: H04Q 9/04, G08C 15/06, G01D 4/00

(54) **Verfahren und Vorrichtung zur Datenerfassung**
Method and apparatus for acquiring data
Méthode et dispositif pour l'acquisition de données

(30) Priorität: 16.08.2000 DE 10040604
(43) Veröffentlichungstag der Anmeldung: 20.02.2002
(73) Patentinhaber: QUNDIS GmbH, 99974 Mühlhausen (DE)
(72) Erfinder: Pahl, Uwe, 99974 Mühlhausen (DE); Tunkel, Herbert, 37434 Rüdershausen (DE)
(74) Vertreter: Liedtke, Markus

(56) Entgegenhaltungen:
- EP-A- 0 962 904
- DE-A1- 4 225 042
- DE-A1- 19 905 316

## Beschreibung

Die vorliegende Erfindung bezieht sich auf ein Verfahren zur Datenerfassung von Daten dezentral angeordneter Datenerfassungsgeräte nach dem Oberbegriff des Patentanspruches 1, auf eine Vorrichtung zur Datenerfassung von Daten dezentral angeordneter Datenerfassungsgeräte nach dem Oberbegriff des Patentanspruches 12 sowie auf eine Verwendung des Verfahrens nach Patentanspruch 20.

Derartige Verfahren bzw. Vorrichtungen sind beispielsweise aus der WO 98/10394 bekannt, wobei Daten mittels mindestens eines Datenerfassungsgeräts erfaßt und über mindestens eine Zwischenstation an eine zentrale Datensammelstelle weitergeleitet werden. Diese Verfahren und Vorrichtungen eignen sich insb. zur Erfassung von Verbrauchsdaten mittels Meßgeräten an beispielsweise dezentral gelegenen Heizkörpern von Räumen eines Gebäudes, die bisher von Ablesepersonal abgelesen und zur Berechnung des Verbrauchs von Strom, Gas, Wasser oder Wärme erfaßt wurden.

Für die Meßgeräte zur Erfassung von Verbrauchsdaten existieren eine Vielzahl von Restriktionen, wie beispielsweise Sabotagesicherheit, Lebensdauer, Größe oder auch Zugriffszeit.

Derartige Verfahren zur Datenerfassung von Daten dezentral angeordneter Datenerfassungsgeräte werden in der Praxis über Datenübertragungskabel abgewickelt, welche sich zwischen einer zentralen Datensammelstelle und mehreren mit dieser verbundenen Datenerfassungsgeräten erstrecken. Für viele Anwendungsfälle ist eine derartige Datenübertragung nicht einsetzbar, weil die Installation der verschiedenen Datenübertragungskabel von den Kosten her oder von den hiermit verbundenen Belästigungen nicht akzeptierbar oder kurzfristig mit vertretbarem Aufwand nicht möglich ist.

Bei der Fern-Verbrauchsablesung in schon existierenden Gebäuden wäre es daher wünschenswert, die verschiedenen Verbrauchsmeßgeräte für Wasser, Gas, Öl, Elektrizität, Wärme usw., die in den verschiedenen Wohneinheiten eines Hauses an verschiedenen Stellen installiert sind, ablesen zu können, ohne einen Zugang zu den einzelnen Meßstellen zu haben. Bei der manuellen Ablesung dieser Meßgeräte entstehen hohe Personalkosten.

Aus der DE 42 25 042 A1 ist eine Vorrichtung zur drahtlosen Datenübertragung zwischen den dezentral angeordneten Datenerfassungsgeräten und einer zentralen Datensammelstelle bekannt, wonach eine Vielzahl von Datenerfassungsgeräte mittels Funk die Verbrauchsdaten an die zentrale Datensammelstelle übermitteln. Die dezentralen Datenerfassungsgeräte übermitteln hierbei ihre Datensätze in fest vorgegebenen Zeitfenstern kleiner Breite. Dadurch können die Datenerfassungsgeräte mit Hilfe von Langzeitbatterien über einen längeren Zeitraum hinweg die Daten an die zentrale Datensammelstelle übermitteln.

Aus der WO 98/45717 ist ein Verfahren bzw. eine Vorrichtung zur Datenerfassung von Daten dezentral angeordneter Datenerfassungsgeräte bekannt, wobei zwischen dezentral angeordneten Datenerfassungsgeräten und einer zentralen Datensammelstelle eine bidirektionale drahtlose Funkübertragung stattfindet, um beispielsweise Verbrauchsdaten von den Datenerfassungsgeräten an die zentrale Datensammelstelle zu übermitteln.

Aus der WO 98/10394 ist weiterhin ein gattungsgemäßes Verfahren bzw. Vorrichtung bekannt, wobei die Ablesedaten der dezentralen Datenerfassungsgeräte bidirektional über eine Zwischenstation an eine zentrale Datensammelstelle zur Verbrauchsdatenerfassung und -abrechnung übermittelt werden. Sowohl die dezentralen Datenerfassungsgeräte als auch die Zwischenstationen sind dabei sowohl untereinander als auch mit der zentralen Datensammelstelle bidirektional kommunikativ verbunden.

Schließlich ist aus "Leitfäden der angewandten Informatik, Datenübertragung und Rechnernetze"; Dr. sc. math. ETH Pietro Schicker, Seiten 181 - 186, B.G. Teubner Stuttgart Verlag 1983, bekannt, Netzwerktopologien für Radio-Netze mittels verschiedener Kommunikationsverfahren aufzubauen. Diese Verfahren beschreiben verschiedene Möglichkeiten der Versendung von Daten von zentralen Quellenstationen über Relaisstationen zu Zielstationen.

Bei diesen bekannten Vorrichtungen bzw. Verfahren zur Erfassung von Daten dezentral angeordneter Datenerfassungsgeräte besteht zunächst der Nachteil darin, daß die Sendeleistung der dezentralen Datenerfassungsgeräte gering ist, falls diese möglichst lange betrieben werden sollen und daher wegen der begrenzten Kapazität entsprechender Langzeitbatterien nur eine geringe Funkreichweite aufweisen. Die Funkreichweite dieser dezentralen Datenerfassungsgeräte ist daher durch die zur Verfügung stehende Batteriekapazität, aber auch durch gesetzliche Beschränkungen der Sendeleistung begrenzt. In massiven Gebäuden ist es daher oft nicht möglich, die Daten von allen Meßpunkten zu einer einzigen zentralen Empfangsantenne zu übertragen. Es müssen je nach Gebäudestruktur mehrere Empfangspunkte, d.h. Zwischenstationen, installiert werden. Diese Zwischenstationen bestehen aus einer Antenne und einem Empfänger, um von dort die Daten entweder über Kabel oder auch über Funk an die zentrale Datensammelstelle weiterzuleiten.

Eine derartige Vorrichtung ist aus der DE 42 35 187 A1 bekannt. Hier dienen Zwischenstationen, sog. lokale Empfangseinrichtungen, zum drahtlosen Empfang von Daten von Datenerfassungsgeräten, die den Verbrauchswert bsp. eines Heizkörpers erfassen. Die Datenerfassungsgeräte weisen darüber hinaus eine Zeitgebereinrichtung auf, von der die Sendeeinrichtung des Datenerfassungsgeräts jeweils außerhalb der Dauer eines vorbestimmten Zeitfensters, in dem der Verbrauchswert übertragen wird, abgeschaltet wird. Dadurch wird die Funk-Übertragung der Daten der Datenerfassungsgeräte trotz eines begrenzten Energievorrats (Batterie) des Datenerfassungsgeräts über einen langen Zeitraum gewährleistet. Auch die Zwischenstationen schalten nur während dieser vorbestimmten Zeitfenster auf Empfang. Die Zeitfenster sind vorgegeben, d.h. bei der Installation des Systems wird bsp. ein Jahr oder ein Monat eingestellt. Auch ist die Zuordnung der Datenerfassungsgeräte zu der jeweiligen Zwischensation anhand eines Identifizierungscodes fest vorgegeben.

Der Nachteil dieses Systems liegt darin, daß jeder Zwischenstation Datenerfassungsgeräte fest zugeordnet werden. Falls die Funk-Übertragung bsp. aufgrund Umbaumaßnahmen innerhalb des Gebäudes unterbrochen wird, kann die Zwischenstation das Datenerfassungsgerät nicht mehr empfangen. Andere Zwischenstationen, die das Datenerfassungsgerät noch empfangen können, sind jedoch nicht auf dieses Datenerfassungsgerät eingestellt, so daß die Daten dieses Datenerfassungsgeräts verloren gehen. Auch ergeben sich aufgrund der gleichzeitigen Datenübertragung vieler Datenerfassungsgeräte zu etwa gleichen Zeiten Überschneidungen und Störungen, da die Zeiträume für alle Datenerfassungsgeräte fest vorgegeben und in etwa gleich sind. Die Daten müssen daher mehrmals übertragen werden und belasten somit die Energieresourcen des Datenerfassungsgeräts.

Der Erfindung liegt daher die Aufgabe zugrunde, ein Verfahren bzw. eine Vorrichtung der vorgenannten Art dahingehend zu verbessern, daß der Installationsaufwand einer solchen Vorrichtung minimiert wird, die Kosten der Datenerfassung reduziert werden und die Daten möglichst sicher und schnell erfaßbar sind. Die Abhängigkeit eines Datenerfassungsgeräts von nur einer Zwischenstation soll vermieden werden.

Weiterhin ist es die Aufgabe der vorliegenden Erfindung ein Datenerfassungssystem anzugeben, welches keine Verkabelung der Datenerfassungsgeräte und der Zwischenstationen benötigt, welches auch von nichtgeschulten Personen installierbar ist, welches die zu erfassenden Daten möglichst täglich zur Verfügung stellt und welches einfach zu handhaben ist.

Die Erfindung löst die ihr zugrundeliegende Aufgabe durch die kennzeichnenden Merkmale der unabhängigen Patentansprüche 1 und 12. Eine vorteilhafte Verwendung des erfindungsgemäßen Verfahrens ist im Patentanspruch 20 beansprucht und gekennzeichnet. Vorteilhafte Ausgestaltungen der Erfindung ergeben sich aus den entsprechenden Unteransprüchen.

Die vorliegende Erfindung offenbart ein Verfahren zur Datenerfassung von Daten dezentral angeordneter Datenerfassungsgeräte mit mindestens einem Datenerfassungsgerät und mindestens einer Zwischenstation, wobei die Daten mittels des mindestens einen Datenerfassungsgeräts erfaßt und über erste Kommunikationswege an die mindestens eine Zwischenstation weitergeleitet werden, und wobei die Daten in vorbestimmbaren Zeitabständen und während eines vorbestimmbaren Zeitfensters von dem Datenerfassungsgerät übertragen werden. Das mindestens eine Datenerfassungsgerät wird der mindestens einen Zwischenstation automatisch zugeordnet, wobei die mindestens eine Zwischenstation nur während des vorbestimmbaren Zeitfensters und nach dem vorbestimmbaren Zeitabstand des jeweiligen der Zwischenstation zugeordneten Datenerfassungsgeräts auf Datenempfang geschaltet wird.

Der Zeitabstand und/oder das Zeitfenster für den Datenempfang der Zwischenstation berechnet sich aus dem vorbestimmbaren Zeitabstand bzw. dem vorbestimmbaren Zeitfenster des zugeordneten Datenerfassungsgeräts einschließlich eines dem Datenerfassungsgerät eigenen Zeitfehlers.

Nach einer ersten vorteilhaften Ausführungsform der Erfindung werden die Daten in vorbestimmbaren Zeitabständen und während eines vorbestimmbaren Zeitfensters von dem Datenerfassungsgerät, vorzugsweise einem Verbrauchsmessgerät mit Funksender, an die Zwischenstation, vorzugsweise ein batteriebetriebener Sender/Empfänger zur Montage in Funkreichweite der Datenerfassungsgeräte, abgeschickt. Die Zwischenstation wird jedoch nur während den vorbestimmbaren Zeitfenstern und nach den vorbestimmbaren Zeitabständen auf Datenempfang geschaltet, die das der Zwischenstation automatisch zugeordnete Datenerfassungsgerät der Zwischenstation vorher, ggf. unter Berücksichtigung eines Zeitfehlers, mitgeteilt hat. Mit Hilfe dieses "Zeitfensterverfahrens", welches eine unidirektionale Sendung der Daten von den Datenerfassungsgeräten zu den Zwischenstationen vorsieht, wird gewährleistet, daß sowohl die Datenerfassungsgeräte als auch die autarken Zwischenstationen lediglich während sehr kurzer Zeiträume "aktiviert" werden, wodurch sich viel Energie durch die eingeschränkte Sende- bzw. Empfangsbereitschaft einsparen läßt.

Ein aus mehreren Datenerfassungsgeräten bzw. Zwischenstationen bestehendes Netzwerk kann dabei beispielsweise aus bis zu 15 Zwischenstationen und 512 Datenerfassungsgeräten bestehen. Es besteht aber auch die Möglichkeit, ein Netzwerk lediglich mit nur einer Zwischenstation aufzubauen. Dieses Netzwerk ist dann in der Lage beispielsweise bis zu 64 Datenerfassungsgeräte zu verwalten.

Besteht ein Netzwerk aus mehr als einer Zwischenstation, kann jede Zwischenstation beispielsweise bis zu 64 Datenerfassungsgeräte durch direkten Empfang verwalten.

Mit dieser Netzwerkstruktur können drei Ebenen untergliedert werden. In der ersten Ebene werden die Daten der Datenerfassungsgeräte an die Zwischenstationen übertragen und dort gespeichert. Die Informationsweitergabe, d.h. die Datenübertragung findet in dieser Ebene vorzugsweise über Telegramme statt, welche zum Beispiel drahtlose Protokolle benutzen. Die zweite Ebene nach der Erfindung dient zur Verbreitung der Daten aller dem Netzwerk zugeordneter Datenerfassungsgeräte zwischen den Zwischenstationen des Netzwerks. Der Datenaustausch findet in dieser Ebene ebenfalls über bestimmte Telegramme statt, die die Daten sowie Adressen und weitere Informationen der Zwischenstationen oder der Datenerfassungsgeräte enthalten. In der dritten Ebene findet die Übertragung der Daten zur Datensammelstelle statt. Auch hier ist die Datenübermittlung drahtlos oder drahtgebunden möglich. Die Datensammelstelle ist dabei mit Vorteil eine zeitweise oder ständig verfügbare Ausleseeinheit, die die Daten von den Zwischenstationen abholt, bzw. anfordert, und zur weiteren Übertragung oder Verarbeitung bereitstellt.

Die Zeitabstände und/oder das Zeitfenster für den Datenempfang der Zwischenstation wird aus den vorbestimmbaren Zeitabständen bzw. den vorbestimmbaren Zeitfenstern des zugeordneten Datenerfassungsgeräts einschl. einem dem Datenerfassungsgerät eigenen Zeitfehler berechnet. Durch Ungenauigkeiten der Uhr im Datenerfassungsgerät hervorgerufene Zeitverschiebungen werden somit ausschließlich in der Zwischenstation detektiert, eingestellt und verändert. Das Datenerfassungsgerät wird aufgrund der unidirektionalen Verbindung mit den Zwischenstationen nicht beeinflußt. In der Zwischenstation wird somit automatisch das nächste Zeitfenster einschl. des Zeitabstandes zwischen den Empfangsintervallen der Daten der Datenerfassungsgeräte zzgl. der Ungenauigkeit der Uhr des Datenerfassungsgeräts berechnet, um so den nächsten Sendezeitpunkt des Datenerfassungsgeräts zu berechnen und die Zwischenstation dann auf Empfangsbereitschaft zu schalten.

Die automatische Zuordnung von Datenerfassungsgeräten zu Zwischenstationen erfolgt zur Optimierung des Energieverbrauchs der Zwischenstationen.

Die Zuordnung der Datenerfassungsgeräte zu den entsprechenden Zwischenstationen erfolgt vorzugsweise zunächst während einer Installationsphase. Die Datenerfassungsgeräte senden besondere Telegramme aus. Alle Zwischenstationen, die diese Telegramme empfangen, synchronisieren sich auf dieses Datenerfassungsgerät und werden auch versuchen, zukünftige Telegramme dieser Datenerfassungsgeräte zu empfangen. D.h. zuerst ist jedes Datenerfassungsgerät allen Zwischenstationen in Funkreichweite zugeordnet. Erst später werden entsprechend bestimmten Kriterien überflüssige Zuordnungen wieder aufgehoben. Diese Kriterien sind beispielsweise der Empfangspegel oder die Anzahl der Datenerfassungsgeräte, die in einer Zwischenstation schon registriert sind. Abhängig vom Empfangspegel werden diese Kriterien mit unterschiedlichem Gewicht zur Entscheidung herangezogen.

Nach dem Zuordnungskriterium "Empfangspegel" werden bsp. die Datenerfassungsgeräte der entsprechenden Zwischenstation zugeordnet, die aufgrund ihrer Sendeleistung bzw. ihres Abstandes von der Zwischenstation oder ggf. aufgrund von die Funkübertragung beeinflussenden Gegenständen zwischen dem Datenerfassungsgerät und der Zwischenstation an der Zwischenstation einen Empfangspegel aufweisen, der höher ist als der Empfangspegel an anderen Zwischenstationen. Weist diese Zwischenstation darüber hinaus noch weniger zugeordnete Datenerfassungsgeräte auf, als andere Zwischenstationen, wird das entsprechende Datenerfassungsgerät der Zwischenstation zugeordnet. Diese Routine kann jederzeit wiederholt werden, bsp. wenn sich die Empfangspegel ändern und eine Neuzordnung notwendig wird.

Die Zwischenstation wird somit nur nach den vorbestimmbaren Zeitfenstern und nach den vorbestimmbaren Zeitabständen derjenigen Datenerfassungsgeräte auf Datenempfang geschaltet, die der Zwischenstation zugeordnet wurden. Während andere, der Zwischenstation nicht zugeordnete Datenerfassungsgeräte Daten senden, werden diese insofern ignoriert, als die Zwischenstation während der Sendedauer dieser Datenerfassungsgeräte nicht auf Empfang geschaltet wird. Somit ergibt sich eine erhebliche Energieeinsparung der Zwischenstationen innerhalb des oben beschriebenen Netzwerks von Zwischenstationen.

Ein weiteres vorteilhaftes Verfahren der vorliegenden Erfindung besteht darin, daß zwischen mehreren Zwischenstationen bidirektionale zweite Kommunikationswege bestehen, wobei den mehreren Zwischenstationen zum Aufbau eines Netzwerks Geräteadressen und eine eineindeutige Netzwerkadresse zugeordnet werden.

Wie bereits oben beschrieben, besteht innerhalb des Netzwerks eine zweite Ebene zur Verbreitung der Daten an möglichst alle Zwischenstationen innerhalb des Netzwerks. Um diese Daten zuverlässig innerhalb des Netzwerkes, d.h. zwischen den einzelnen Zwischenstationen, übertragen zu können, müssen den Zwischenstationen während der Installationsphase vor der Installation der Datenerfassungsgeräte eindeutige Geräteadressen und eine eineindeutige Netzwerkadresse zugeordnet werden.

Zu diesem Zweck ordnen sich die mehreren Zwischenstationen nach einer vorteilhaften Variante der Erfindung selbständig Geräteadressen und eine Netzwerkadresse zu, indem in jeder Zwischenstation während des Installationsmodus, d.h. vorzugsweise beim manuellen Start des Installationsmodus, ein Zähler aktiviert wird und sich die Zwischenstationen untereinander ihre entsprechenden Zählerstände mitteilen. Vergleichen beispielsweise eine erste Zwischenstation und eine zweite Zwischenstation ihre Zählerstände miteinander, so wird der Zwischenstation mit dem niedrigeren Zählerstand, d.h. der "jüngeren" Zwischenstation, eine Geräteadresse und die Netzwerkadresse von der Zwischenstation mit dem höheren Zählerstand, d.h. der "ältesten" Zwischenstation, zugeteilt. Dies wird sukzessive von allen Zwischenstationen durchgeführt bis alle Zwischenstationen unterscheidbare Geräteadressen und eineindeutige Netzwerkadressen aufweisen.

Die Zwischenstationen weisen somit bidirektionale Kommunikationsschnittstellen auf, die die Kommunikation zwischen den Zwischenstationen gewährleisten. Falls bereits adressierte Zwischenstationen auf eine Zwischenstation mit einem noch höheren Zählerstand treffen, so wird die Zwischenstation mit dem höchsten Zählerstand die Geräteadresse und Netzwerkadresse neu vergeben bzw. zuordnen und diese sukzessive an die jeweils "jüngeren" Zwischenstationen mit Hilfe von jeweils neuen Adressen weiterleiten.

Durch die eineindeutige Zuordnung der einzelnen Zwischenstationen untereinander können Daten von den Datenerfassungsgeräten innerhalb des Netzwerks von Zwischenstationen weitergeleitet werden, bis die Daten die zentrale Datensammelstelle erreichen. Es ist somit nicht notwendig, daß jede Zwischenstation mit der zentralen Datensammelstelle in Verbindung steht, sondern es reicht aus, wenn zumindest eine Zwischenstation des Netzwerks mit der zentralen Datensammelstelle bidirektional kommunizieren kann.

Zwei Zwischenstationen bilden somit bereits ein gemeinsames Netzwerk, wenn sich beide Geräte im Installationsmodus befinden. Der Installationsmodus wird beispielsweise durch ein Kennungstelegramm der Zwischenstationen bzw. durch ein Installationstelegramm der Datenerfassungsgeräte erkannt. Ein Netzwerk als solches wird jedoch bereits durch eine einzige Zwischenstation realisiert.

Mit Vorteil erfolgt die Anmeldung der Datenerfassungsgeräte bei einer entsprechenden Zwischenstation ebenfalls selbständig, wobei jedes Datenerfassungsgerät über die ersten unidirektionalen Kommunikationswege ein Anmeldesignal absendet, welches von mehreren Zwischenstationen empfangen wird. Die sich im Installationsmodus befindlichen Zwischenstationen vergleichen den Empfangspegel des Datenerfassungsgeräts mit einem Mindestempfangspegel, um zunächst festzustellen, ob das Datenerfassungsgerät überhaupt in dem entsprechenden Netzwerk eingliederbar ist. Ist dies der Fall, so wird das Datenerfassungsgerät zunächst mehreren Zwischenstationen zugeordnet. Diese ordnen die Datenerfassungsgeräte, wie oben beschrieben, zu einem späteren Zeitpunkt jeweils einer einzigen Zwischenstation zu. Dies läßt sich auch als "Fensterschließalgorithmus" bezeichnen, da redundante "Empfangsfenster" einzelner Zwischenstationen aus Energieeinsparungsgründen "geschlossen" werden.

Die Zwischenstation muß somit nur dann auf "Datenempfang" geschaltet werden, wenn die Datenerfassungsgeräte, die der Zwischenstation zugeordnet wurden, auf "Sendung" gehen und Daten anhand geeigneter Telekommunikationstelegramme an die Zwischenstation senden. Während der Installationsphase ist der Empfänger der Zwischenstation jedoch kontinuierlich auf Empfang geschaltet, da dieser nicht erkennen kann, wann ein neues Datenerfassungsgerät sendet, um sich anzumelden.

Der Aufbau eines Netzwerks erfolgt somit vorzugsweise nach folgendem Schema:
Alle Zwischenstationen, die während der Installationsphase Zählerstand und Gerätedaten ausgetauscht haben und sich somit auf eine einheitliche Netzwerkadresse und auf für jedes Gerät einmalige eindeutige Geräteadresse geeinigt haben, gehören zu einem Netzwerk. Alle Datenerfassungsgeräte, die während des Installationsmodes Installationstelegramme ausgesendet haben und von mindestens einer Zwischenstation des Netzwerkes registriert worden sind, sind Mitglieder des Netzwerkes.

Die Selektion der Datenerfassungsgeräte erfolgt somit vorzugsweise nach folgendem Schema:
Insbesondere aus Gründen der Stromersparnis und der Reduktion des Funkverkehrs werden nach gewissen Kriterien die "Empfangsfenster" bestimmter Zwischenstationen für diverse Datenerfassungsgeräte geschlossen und weiterhin nicht mehr bedient. Die Daten dieser Datenerfassungsgeräte werden von anderen Zwischenstationen erfasst und im Netzwerk verteilt.
   D.h. die Datenerfassungsgeräte bleiben auch nach dem Schließen der "Empfangsfenster" bestimmter Zwischenstationen mittels anderer Zwischenstationen weiterhin Mitglied des Netzwerkes.

Die Daten von der mindestens einen Zwischenstation werden über dritte Kommunikationswege bidirektional an die zentrale Datensammelstelle weitergeleitet. Die Datenübertragung über die unidirektionalen ersten Kommunikationswege und/oder die Datenübertragung über die bidirektionalen zweiten Kommunikationswege und/oder die Datenübertragung über die bidirektionalen dritten Kommunikationswege erfolgt nach einer besonderen Ausführungsform der Erfindung drahtlos. Die Datenübertragung über die bidirektionalen zweiten Kommunikationswege und/oder die Datenübertragung über die bidirektionalen dritten Kommunikationswege kann drahtgebunden durchgeführt werden, falls der Installationsaufwand für die Verkabelung vertretbar ist.

Innerhalb des Netzwerks werden die Daten der Datenerfassungsgeräte oder auch die Daten der Zwischenstationen von den Zwischenstationen gespeichert und im Netzwerk wiederholt gezielt oder ungezielt über die zweiten bidirektionalen Kommunikationswege verschickt. Mit Vorteil werden die Daten anhand von Kommunikationstelegrammen genau einmal wiederholt verschickt, um einerseits sicherzustellen, daß die Daten der Datenerfassungsgeräte zuverlässig im Netzwerk der Zwischenstationen weitergeleitet werden und um andererseits das Netzwerk nicht durch zu viele wiederholte Datenpakete zu belasten.

Mit Vorteil legt das Datenerfassungsgerät die vorbestimmbaren Zeitabstände und die vorbestimmbaren Zeitfenster quasizufällig mittels einer Zahlenkombination fest, um zu verhindern, daß mehrere, derselben Zwischenstation zugeordnete Datenerfassungsgeräte gleichzeitig senden und sich somit stören. Die vorbestimmbaren Zeitabstände und die vorbestimmbaren Zeitfenster werden der entsprechenden Zwischenstation mittels eines Telekommunikationstelegramms, mit Vorteil gleichzeitig mit dem. Datentelegramm, mitgeteilt. Nach einer bevorzugten Ausführungsform der Erfindung beinhaltet das Datentelegramm des Datenerfassungsgeräts eine Zahlenkombination, die im Telegrammkopf enthalten ist und die bsp. von der Geräteadresse und anderen Parametern, die für das Datenerfassungsgerät spezifisch sind, abhängt. Diese Zahlenkombination ist daher von Datenerfassungsgerät zu Datenerfassungsgerät verschieden. Aus dieser "quasizufälligen" Zahlenkombination bzw. "Zufallszahl", deren Verschlüsselung der Zwischenstation bekannt ist, berechnet die Zwischenstation den Zeitabstand und das Zeitfenster für die nächste Datenübertragung dieses Datenerfassungsgeräts. Diejenige Zwischenstation, der das Datenerfassungsgerät zugeordnet wurde, schaltet nur während dieser vorbestimmten Zeitfenster und dieser vorbestimmten Zeitabstände auf Datenempfang. Kommt es daher zufällig zu einer gleichzeitigen Daten-Sendung derselben Zwischenstation zugeordneter Datenerfassungsgeräte, so "überschneiden" sich diese Datenerfassungsgeräte bei der nächsten Daten-Sendung aufgrund der individuellen Zahlenkombinationen und der daraus berechneten unterschiedlichen nächsten Empfangszeiten nicht mehr.

Weiterhin sieht eine vorteilhafte Ausführungsform der Erfindung vor, mehrere Netzwerke parallel zu betreiben. Daten eines ersten Netzwerks werden mittels diesem Netzwerk zugeordneten Zwischenstationen und Daten eines zweiten Netzwerks werden mittels diesem zweiten Netzwerk zugeordneten Zwischenstationen an die Datensammelstelle weitergeleitet. Zwischen den Zwischenstationen eines Netzwerks werden somit Daten fremder Netzwerke nicht übertragen, da diese durch geeignete Kommunikationsprotokolle bzw. Netzwerkadressen entsprechend identifiziert und ignoriert werden.

Die Erfindung betrifft weiterhin eine Vorrichtung zur Datenerfassung von Daten dezentral angeordneter Datenerfassungsgeräte mit mindestens einem Datenerfassungsgerät und einer zentralen Datensammelstelle, wobei das Datenerfassungsgerät Daten erfaßt und mindestens eine Zwischenstation die Daten des Datenerfassungsgeräts an die zentrale Datensammelstelle weiterleitet. Die erfindungsgemäße Vorrichtung ist mit entsprechenden Kommunikationsmitteln ausgerüstet, um die vorbeschriebenen vorteilhaften Ausführungsformen des erfindungsgemäßen Verfahrens zu realisieren.

Mit Vorteil weist das Datenerfassungsgerät einen Sender zum Senden von Daten über die unidirektionalen ersten Kommunika-tionswege an die mindestens eine Zwischenstation auf, die einen entsprechenden Empfänger beinhaltet. Die Zwischenstation weist darüber hinaus Selektiermittel zum Zuordnen von Datenerfassungsgeräte zu der entsprechenden Zwischenstation auf.

Diese Selektiermittel messen u.a. die Leistung des von einem Datenerfassungsgerät empfangenen Signals und vergleichen diese Leistung mit einer vorbestimmbaren Mindestempfangsleistung, um festzustellen, ob das Datenerfassungsgerät der Zwischenstation des entsprechenden Netzwerks zuzuordnen ist. Die Selektiermittel ordnen somit nur die Datenerfassungsgeräte dem entsprechenden Netzwerk zu, die aufgrund ihrer Sendeleistung an mindestens einer Zwischenstation des Netzwerks eine vorbestimmbare Mindestempfangsleistung überschreiten.
Weiterhin speichern die Selektiermittel die Empfangsleistung, falls das Datenerfassungsgerät mindestens einer Zwischenstation des Netzwerks zugeordnet wurde. Dieser Empfangspegel wird dann über das Netzwerk von Zwischenstationen übertragen und dient mitunter als Kriterium zur Zuordnung von Datenerfassungsgeräten zu Zwischenstationen.

Es sind jedoch auch andere Kriterien, wie oben erwähnt, für die Zuordnung der Datenerfassungsgeräte zu der entsprechenden Zwischenstation vorsehbar. Beispielsweise dient die Anzahl der Datenerfassungsgeräte pro Zwischenstation oder eine manuelle Zuordnung der Datenerfassungsgeräte zu den Zwischenstationen als Selektierkriterium.

Während ein Datenerfassungsgerät während des Installationsmodus besondere vorbestimmbare Telegramme zur Anmeldung an Zwischenstationen aussendet, selektieren die Zwischenstationen vorzugsweise zu einem späteren Zeitpunkt die ihnen dann zugeordneten Datenerfassungsgeräte desselben Netzwerks. Für die Zuordnung eines Datenerfassungsgeräts zum Netzwerk wird mit Vorteil die Mindestempfangsleistung verwendet, während für die Zuordnung zu einer Zwischenstation mit Vorteil die Installationstelegramme und/oder die Anzahl der Datenerfassungsgeräte pro Zwischenstation verwendet werden.

Die erfindungsgemäße Vorrichtung besteht somit aus Zwischenstationen und Datenerfassungsgeräten, die untereinander die Daten nur in vorbestimmbaren Zeitabständen und während eines vorbestimmbaren Zeitfensters absenden, wobei die Zwischenstationen nur während vorbestimmbarer Zeitfenster und nach vorbestimmbaren Zeitabständen auf Datenempfang schaltbar sind.

Die Zwischenstationen weisen Mittel zur Berechnung der Zeitabstände und/oder des Zeitfensters für den Datenempfang von Daten der Datenerfassungsgeräte auf, wobei die Berechnung über die vorbestimmten Zeitabstände bzw. die vorbestimmten Zeitfenster der der jeweiligen Zwischenstation zugeordneten Datenerfassungsgeräte einschließlich einem den zugeordneten Datenerfassungsgeräten eigenen Zeitfehler erfolgt.

Zwischen den mehreren Zwischenstationen bestehen bidirektionale zweite Kommunikationswege und die mehreren Zwischenstationen weisen zusätzliche Zuordnungsmittel auf, um selbständig ein Netzwerk aufzubauen. Diese Zuordnungsmittel der mehreren Zwischenstationen weisen sich Geräteadressen und eine Netzwerkadresse zu, indem in jedem Zuordnungsmittel einer jeden Zwischenstation während eines Installationsmodus ein Zähler aktivierbar ist, die Zuordnungsmittel ihre Zählerstände miteinander vergleichen und das Zuordnungsmittel mit dem höheren Zählerstand dem Zuordnungsmittel mit dem niedrigeren Zählerstand dieser Zwischenstation Adressen zuteilt, bis sukzessive alle Zwischenstationen eineindeutige Adressen aufweisen. Die Zähler der Zwischenstationen werden vorzugsweise beim Start des Installationsmodus aktiviert.

Während die Datenerfassungsgeräte lediglich Sender für die unidirektionale Kommunikation aufweisen, besitzen die Zwischenstationen und mit Vorteil auch die Datensammelstelle Sender und Empfänger zur Funkübertragung der Daten über bidirektionale Kommunikationswege. Weiterhin können die Zwischenstationen und die zentrale Datensammelstelle oder auch die Zwischenstationen der verschiedenen Netzwerke Daten über Funk und/oder Bus- und/oder über Koaxialleitungen oder Zweidrahtleitungen leiten. Mit Vorteil leiten die Zwischenstationen ihre Daten drahtgebunden an die Datensammelstelle weiter, falls dies durch einen vertretbaren Installationsaufwand der Kabel vertretbar ist.

Mit Vorteil läßt sich das erfindungsgemäße Verfahren bzw. die erfindungsgemäße Vorrichtung zur Erfassung von Verbrauchsdaten dezentral angeordneter Meßgeräte in Räumen von Gebäuden zur Messung des Verbrauchs von Wasser, Gas, Wärme, Elektrizität oder dergleichen einsetzen. Die Meßdaten entsprechender Meßgeräte werden dabei an in Etagen der Gebäude angebrachte Zwischenstationen gesendet und von dort an eine zentrale Datensammelstelle zur zentralen Ablesung der Verbrauchsdaten weitergeleitet. Die Zwischenstationen einer Etage können dabei ein eigenes Netzwerk pro Etage bilden, oder die Zwischenstationen aller Etagen bilden ein einziges Netzwerk zur Datenübertragung der Daten der Meßgeräte an die zentrale Datensammelstelle, die sich bsp. im Keller des Gebäudes befindet.

Je nach der Konfiguration des Gebäudes lassen sich so in einfacher und kostengünstiger Weise verschiedene Netzwerke aufbauen, die sich selbständig konfigurieren, selbständig zuordnen und anhand geeigneter Kommunikationsprotokolle die Daten bei minimalem Energieverbrauch zuverlässig an die Datensammelstelle senden.

Eine vorteilhafte Ausführungsform der vorliegenden Erfindung wird anhand der nachfolgenden Zeichnungen näher erläutert. Dabei zeigen:
- Figur 1: ein Strukturbild des erfindungsgemäßen Verfahrens bzw. der erfindungsgemäßen Vorrichtung;
- Figur 2: eine Anwendungsvariante des erfindungsgemäßen Verfahrens bzw. der erfindungsgemäßen Vorrichtung; und
- Figur 3: ein Strukturbild zur Verdeutlichung der Zuordnung einzelner Datenerfassungsgeräte zu den Zwischenstationen.

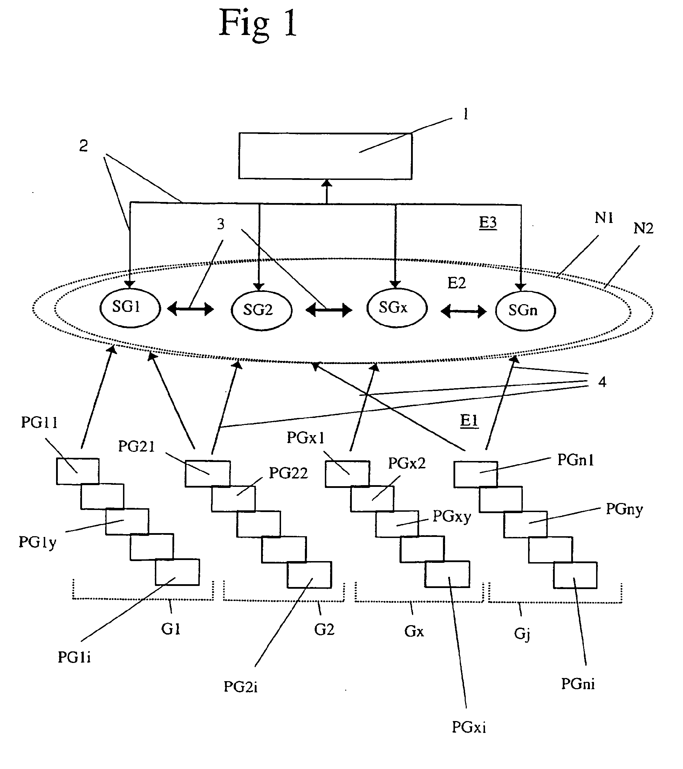

Figur 1 zeigt eine zentrale Datensammelstelle 1, die über bidirektionale dritte Kommunikationswege 2 innerhalb einer dritten Netzwerkebene E3 Daten mit Zwischenstationen SG1..n austauscht. Zwischen den Zwischenstationen SG1..n bestehen bidirektionale zweite Kommunikationswege 3 innerhalb einer zweiten Netzwerkebene E2.

Die Zwischenstationen SG1..n bilden mit den zugehörigen Datenerfassungsgeräten PG11..ni beispielsweise ein erstes Netzwerk N1, welches vor einem angedeuteten zweiten Netzwerk N2 mit ähnlicher Struktur (nicht dargestellt) in Fig. 1 dargestellt ist. Jeder Zwischenstation SGx werden eine Reihe von Datenerfassungsgeräte Pgxy zugeordnet. In Figur 1 werden verschiedene Datenerfassungsgeräte PGxy einer Gebietsgruppe G1..j einer Zwischenstation SGx zugeordnet. Beispielsweise werden die Datenerfassungsgeräte PG11 bis PG1i der Gebietsgruppe G1 der Zwischenstation SG1 zugeordnet.

Die zweite Gruppe von Datenerfassungsgeräten PG21 bis PG2i der Gebietsgruppe G2 wird der Zwischenstation SG2 zugeordnet. Sollte sich der Empfang zwischen den Datenerfassungsgeräten PG21 bis PG2i der Gebietsgruppe G2 zu der Zwischenstation SG2 verschlechtern, so werden anhand der unidirektionalen ersten Kommunikationswege 4 innerhalb der ersten Netzwerkebene E1 andere Verbindungswege zu anderen Zwischenstationen, beispielsweise zu der Zwischenstation SG1 aufgebaut. Ein Datenerfassungsgerät PGxy kann zunächst Verbindungen mit mehreren Zwischenstationen eines Netzwerks haben. Überflüssige Verbindungen werden zu einem späteren Zeitpunkt nach entsprechender o.e. Selektion geschlossen.

Die Zuordnung der Gebietsgruppen G1..j von Datenerfassungsgeräten zu den jeweiligen Zwischenstationen SG1..n erfolgt somit aufgrund der vorbeschriebenen Zuordnungsmittel der Zwischenstationen SG1..n beispielsweise anhand der in der Zwischenstation SGx der detektierten Empfangsleistung des jeweiligen Datenerfassungsgeräts PGxy.

Insgesamt sind eine Gesamtanzahl von n x i (z.B. 512) Datenerfassungsgeräte einer Anzahl n (z.B. 15) von Zwischenstationen zuordnungsbar, wobei die Datenerfassungsgeräte PGxy in insgesamt j (z.B. 15) Gebietsgruppen aufgeteilt sind.

Das in Fig.1 dargestellte Netzwerk N1 besteht aus den Zwischenstationen SG1 bis SGn. Hinter dem Netzwerk N1 ist ein zweites Netzwerk N2 angedeutet, welches ebenfalls aus Zwischenstationen SG1 (2) bis SGn(2) (nicht dargestellt) und zugehörigen Datenerfassungsgeräten PG11(2)..ni(2) (nicht dargestellt) besteht. Normalerweise hat ein Datenerfassungsgerät PGxy nur eine Verbindung mit einem Netzwerk. Möglich ist jedoch auch die Variante, wonach ein Datenerfassungsgerät PGxy Verbindungen mit zwei oder mehreren Netzwerken hat.

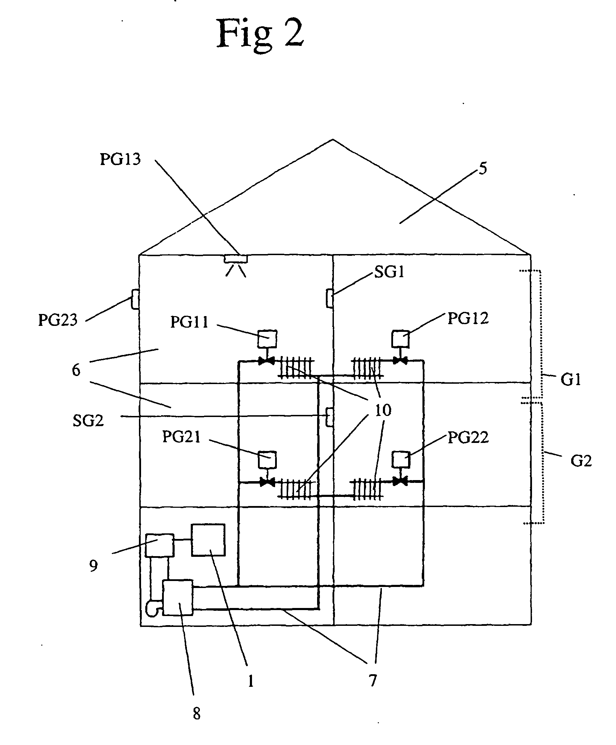

Figur 2 zeigt eine bevorzugte Anwendungsform des erfindungsgemäßen Verfahrens bzw. der erfindungsgemäßen Vorrichtung. An beispielsweise Heizkörpern 10 innerhalb von Räumen 6 eines Gebäudes 5 werden Wärmezähler, d.h. Datenerfassungsgeräte PGxy angebracht, um den Wärmeverbrauch eines jeden Heizkörpers 10 zu messen. Die Wärme wird über einen Wärmeerzeuger 8, der von einem Regelgerät 9 gesteuert wird, an die Heizkörper 10 geliefert. Zur Sammlung der Daten der Datenerfassungsgeräte PGxy dient eine zentrale Datensammelstelle 1. Leitungen 7 liefern die Wärme an die Heizkörper 10.

In Figur 2 sind zwei Zwischenstationen SG1 und SG2 jeweils innerhalb einer Etage dargestellt, wobei die obere Etage als Gebietsgruppe G1 und die untere Etage als Gebietsgruppe G2 gekennzeichnet ist. Der Zwischenstation SG1 werden zwei Datenerfassungsgeräte PG11 und PG12 zweier Heizkörper 10 innerhalb der oberen Etage sowie beispielsweise ein als DatenerfassungsgerätPG13 dienender Elektrizitätszähler zugeordnet.

Der zweiten Zwischenstation SG2 der unteren Etage werden ebenfalls zwei an den Heizkörpern 10 der unteren Etage angebrachte Datenerfassungsgeräte PG21 und PG22 zugeordnet sowie beispielsweise ein in der oberen Etage als Gaszähler angebrachtes Datenerfassungsgerät PG23. Hieraus wird ersichtlich, daß das beispielsweise als Gaszähler in der oberen Etage angebrachte Datenerfassungsgerät PG23 der zweiten Zwischenstation SG2 zugeordnet wird, falls diese zweite Zwischenstation SG2 das als Gaszähler dienende Datenerfassungsgerät PG23 besser empfängt als die erste Zwischenstation SG1.

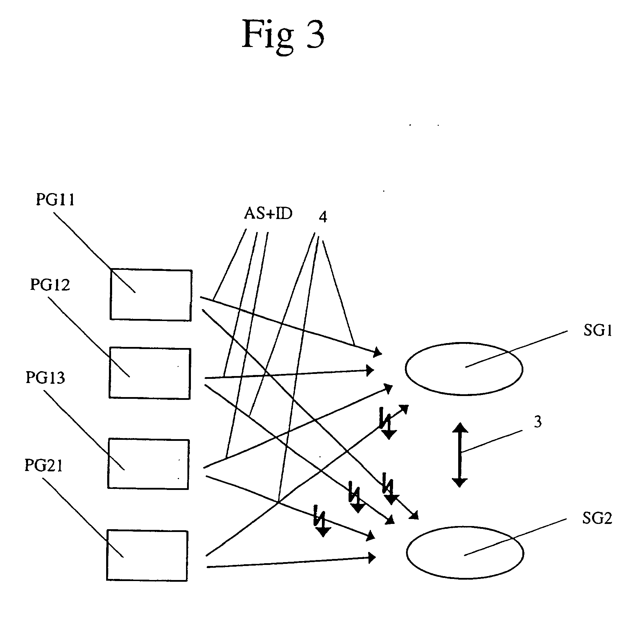

Figur 3 zeigt ein schematisches Strukturbild zur Verdeutlichung der "Anmeldeprozedur" der einzelnen Datenerfassungsgeräte PG11 bis PG21 bei den Zwischenstationen SG1 und SG2. Während die linksseitig dargestellten ersten drei Datenerfassungsgeräte PG 11, PG12 und PG 13 der ersten Zwischenstation SG1 zugeordnet werden, wird das linksseitig vierte dargestellte Datenerfassungsgerät PG21 der zweiten Zwischenstation SG2 zugeordnet.

Die Zuordnung erfolgt über ein Anmeldesignal AS, welches eine Identifikationsnummer ID enthält, das über die ersten unidirektionalen Kommunikationswege 4 von allen Datenerfassungsgeräten PG11 bis PG21 abgesendet wird und, wie in Figur 3 dargestellt, auch von beiden Zwischenstationen SG1 und SG2 empfangen wird. Die Zwischenstationen SG1 und SG2 speichern die Empfangsleistung aller Datenerfassungsgeräte PG11 bis PG21 und tauschen sich untereinander die Daten der Datenerfassungsgeräte und die Empfangsleistung eines jeden Datenerfassungsgeräts PG11..21 aus. Beide Zwischenstationen, die dasselbe Datenerfassungsgerät empfangen, vergleichen ihre Werte (Empfangspegel) mit den Werten (Empfangspegel) der anderen Zwischenstation und entscheiden dann aufgrund der Empfangspegel und der Anzahl der direkt empfangenen Datenerfassungsgeräte, ob der Empfang weiter fortgesetzt werden soll. Ein Mindestempfangspegel wird für die Zuordnung einer Zwischenstation zu einem Netzwerk herangezogen.

Wie in Figur 3 dargestellt, ist der Empfangspegel der linksseitig ersten drei Datenerfassungsgeräte PG11, PG12 und PG13 für die zweite Zwischenstation SG2 und der Empfangspegel des linksseitig vierten Datenerfassungsgeräts PG21 für die Zwischenstation SG1 geringer (durch "Blitz"-Pfeile gekennzeichnet). Die Empfangspegel aller vier Datenerfassungsgeräte PG11 bis PG21 überschreiten jedoch einen Mindestempfangspegel, so daß alle Datenerfassungsgeräte dem Netzwerk N1, bestehend aus den Zwischenstationen SG1 und SG2, zugeordnet werden können.

Die in den Figuren 1 bis 3 dargestellten Netzwerke weisen eine erfindungsgemäße Netzwerktopologie auf. Jedes Datenerfassungsgerät PGxy kann bei der Installation des Netzwerks durch mehrere Zwischenstationen SGx empfangen werden. Im Laufe der ersten Betriebstage wird jedes Datenerfassungsgerät PGxy nach dem oben beschriebenen Algorithmus einer speziellen Zwischenstation SGx eines Netzwerks zugeordnet. Der Empfang eines Datenerfassungsgeräts PGxy durch mehrere Zwischenstationen SGx ist zulässig.

Jede Zwischenstation SGx bildet somit einen Netzknoten für die erste Netzwerkebene E1. Die Zwischenstationen SGx sind untereinander gleichberechtigt. Jede Zwischenstation SGx, die sich innerhalb der Funkreichweite einer anderen Zwischenstation SGx+1 befindet, empfängt dessen Telegramme bzw. Daten. Mit Vorteil bildet sich somit eine redundanzbehaftete und für jede Gebäudestruktur optimale Topologie aus. Durch die Verbreitung der Daten im Netzwerk stehen sie nach einer Zeit allen Zwischenstationen SG1..n zur Verfügung. Die Daten können somit von jeder Zwischenstation SGx ausgelesen und weitergeleitet werden.

Mit Vorteil werden die Daten innerhalb des Netzwerks adressiert und ungerichtet versendet. Der Weg zum Empfänger ist innerhalb des Netzwerks N1 beispielsweise nicht explizit festgelegt. Die Daten können somit auf unterschiedlichen Wegen zum Empfänger gelangen. Bei der Adressierung der Daten kann es sich um eine gezielte Zwischenstationsadresse oder um eine Rundrufadresse handeln. Die Sendung der Daten, d.h. der Telegramme, erfolgt zu den oben beschriebenen festgelegten Zeiten. Diese Zeiten sind den entsprechenden Zwischenstationen SGx jeweils bekannt, die sich in der Funkreichweite der jeweils anderen Zwischenstation SGx-1 befinden. Jedes der empfangenen Datentelegramme wird eindeutig identifizert und in einem späteren Sendefenster mit Vorteil genau einmal wieder ausgesendet.

Auf diese Weise werden die Daten im ganzen Netzwerk verbreitet, wobei die Verbreitung eines Datentelegramms bzw. eines Datenpakets nach Durchlauf durch das Netzwerk von selbst endet, da jede Zwischenstation SGx das Datenpaket mit den gespeicherten Datenpaketen vergleicht, die in Speichermitteln der Zwischenstationen SGx gespeichert sind, um so festzustellen, ob das Datenpaket bereits ausgesendet wurde, oder ob es sich um ein neues Datenpaket handelt, welches noch mit Vorteil genau einmal ausgesendet werden muß.

Zur Synchronisierung der Systemzeit eines Netzwerks N1 wird als Zeitbasis die Zeit der "ältesten" Zwischenstation SG1 als erstes Gerät im Netzwerk definiert. Die weiteren Zwischenstationen SG2..n, die sich im Netzwerk sukzessive eingliedern, übernehmen einmalig die Zeit der ersten Zwischenstation SG1. Die Zwischenstation-Uhrzeit aller Zwischenstationen im Netzwerk wird regelmäßig mit dem beispielsweise Statustelegramm übertragen. Dadurch kann auch zu späteren Zeitpunkten der Zeitfehler zwischen der eigenen Zwischenstation-Zeit einer Zwischenstation SG2..n und der Systemzeit der ersten Zwischenstation SG1 bestimmt werden.

## Patentansprüche

1. Verfahren zur Datenerfassung von Daten dezentral angeordneter Datenerfassungsgeräte, mit
mindestens einem Datenerfassungsgerät (PGxy) und mindestens einer Zwischenstation (SGx), wobei
die Daten mittels des mindestens einen Datenerfassungsgeräts (PGxy) erfaßt und über erste Kommunikationswege (4) an die mindestens eine Zwischenstation (SGx) weitergeleitet werden, und wobei
die Daten in vorbestimmbaren Zeitabständen und während eines vorbestimmbaren Zeitfensters von dem Datenerfassungsgerät (PGxy) übertragen werden,
und
daß das mindestens eine Datenerfassungsgerät (PGxy) der mindestens einen Zwischenstation (SGx) automatisch zugeordnet wird, und
daß die mindestens eine Zwischenstation (SGx) nur während des vorbestimmbaren Zeitfensters und nach dem vorbestimmbaren Zeitabstand des jeweiligen der Zwischenstation (SGx) zugeordneten Datenerfassungsgeräts (PGxy) auf Datenempfang geschaltet wird, **dadurch gekennzeichnet,**
**daß** mehrere Zwischenstationen (SG1..n) vorhanden sind, zwischen denen bidirektionale zweite Kommunikationswege (3) bestehen, und
**daß** den mehreren Zwischenstationen (SG1..n) zum Aufbau eines ersten Netzwerks (N1) eine eindeutige Netzwerkadresse und eindeutige Geräteadressen zugeordnet werden.

2. Verfahren nach Anspruch 1,
**dadurch gekennzeichnet,**
**daß** der Zeitabstand und/oder das Zeitfenster für den Datenempfang der Zwischenstationen (SGx) aus dem vorbestimmbaren Zeitabstand bzw. dem vorbestimmbaren Zeitfenster des zugeordneten Datenerfassungsgeräts (PGxy) einschließlich einem dem Datenerfassungsgerät (PGxy) eigenen Zeitfehler berechnet wird.

3. Verfahren nach Anspruch 1 oder 2,
**dadurch gekennzeichnet,**
**daß** sich die Zwischenstationen (SG1..n) des ersten Netzwerks (N1) selbständig eine Netzwerkadresse und Geräteadressen zuordnen, indem
a) in jeder Zwischenstation (SGx) während eines Installationsmodus ein Zähler aktiviert wird,
b) eine erste Zwischenstation (SGx+1) und eine zweite Zwischenstation (SGx+2) ihre Zählerstände miteinander vergleichen und
c) die Zwischenstation mit dem höheren Zählerstand der Zwischenstation mit dem niedrigeren Zählerstand die Netzwerkadresse und eine Geräteadresse zuteilt, bis sukzessive alle Zwischenstationen (SG1..n) eines Netzwerks eine einheitliche Netzwerkadresse und eineindeutige Geräteadressen aufweisen.

4. Verfahren nach einem der vorhergehenden Ansprüche,
**dadurch gekennzeichnet,**
**daß** die Daten von den Datenerfassungsgeräten (PGxy) über erste unidirektionale drahtlose Kommunikationswege (4) gesendet werden,
**daß** die Zwischenstationen (SG1..n) die Empfangspegel und die Daten der Datenerfassungsgeräte (PGxy) messen bzw. empfangen und speichern,
**daß** die Zwischenstationen (SG1..n) die Daten und die Empfangspegel der Datenerfassungsgeräte (PGxy) über die bidirektionalen zweiten Kommunikationswege (3) untereinander austauschen, und
**daß** die automatische Zuordnung der jeweiligen Datenerfassungsgeräte (PGxy) zu der entsprechenden Zwischenstation (SGx) des ersten Netzwerks (N1) aufgrund der jeweiligen Empfangspegel der Datenerfassungsgeräte (PGxy) und der Anzahl von Datenerfassungsgeräten (PGxy) pro Zwischenstation (SGx) durchgeführt wird.

5. Verfahren nach einem der vorhergehenden Ansprüche,
**dadurch gekennzeichnet,**
**daß** die Datenübertragungen zwischen den Zwischenstationen (SGx) nur während vorbestimmbarer Zeitfenster und nach vorbestimmbaren Zeitabständen erfolgen, indem sich die Zwischenstationen (SGx) die Zeitfenster und Zeitabstände jeweils mitteilen, so daß die Zwischenstationen (SGx) nur während vorbestimmbarer Zeitfenster und nach vorbestimmbaren Zeitabständen anderer Zwischenstationen (SGx) auf Datenempfang geschaltet werden.

6. Verfahren nach einem der vorhergehenden Ansprüche,
**dadurch gekennzeichnet,**
**daß** sich die Datenerfassungsgeräte (PGxy) bei einer Zwischenstation (SGx) während eines Installationsmodus selbständig anmelden, wobei sich die Zwischenstation (SGx) in einem Installationsmodus befindet und wobei jedes Datenerfassungsgerät (PGxy) über die ersten unidirektionalen Kommunikationswege (4) ein Anmeldesignal (AS) absendet, welches von einer Zwischenstation (SGx) im Installationsmodus empfangen wird.

7. Verfahren nach Anspruch 6,
**dadurch gekennzeichnet,**
**daß** ein Datenerfassungsgerät (PGxy) einer Zwischenstation (SGx) eines ersten Netzwerks (N1) im Installationsmodus automatisch zugeordnet wird, wenn der in der Zwischenstation (SGx) des ersten Netzwerks (N1) gemessene Empfangspegel des Datenerfassungsgeräts (PGxy) einen bestimmten Mindestempfangspegel überschreitet.

8. Verfahren nach einem der vorhergehenden Ansprüche,
**dadurch gekennzeichnet,**
**daß** die Daten von mindestens einer Zwischenstation (SGx) gespeichert und/oder über dritte Kommunikationswege (2) bidirektional an eine zentrale Datensammelstelle (1) weitergeleitet werden.

9. Verfahren nach einem der vorhergehenden Ansprüche,
**dadurch gekennzeichnet,**
**daß** die Datenübertragung über die unidirektionalen ersten Kommunikationswege (4) und/oder die Datenübertragung über die bidirektionalen zweiten Kommunikationswege (3) und/oder die Datenübertragung über die bidirektionalen dritten Kommunikationswege (2) drahtlos, und/oder daß die Datenübertragung über die bidirektionalen zweiten Kommunikationswege (3) und/oder die Datenübertragung über die bidirektionalen dritten Kommunikationswege (2) drahtgebunden durchgeführt wird.

10. Verfahren nach einem der vorhergehenden Ansprüche,
**dadurch gekennzeichnet,**
**daß** die Daten der Datenerfassungsgeräte (PGxy) und/oder Daten der Zwischenstationen (SGx) von den Zwischenstationen (SGx) gespeichert und im Netzwerk (N1) wiederholt gezielt und/oder ungezielt über die zweiten Kommunikationswege (3) verschickt werden, insbesondere genau einmal wiederholt verschickt werden.

11. Verfahren nach einem der vorhergehenden Ansprüche,
**dadurch gekennzeichnet,**
**daß** die Daten der Datenerfassungsgeräte (PGxy) mittels der Zwischenstationen (SGx) gespeichert und erst zu einem späteren Zeitpunkt von einer mobilen Datensammelstelle (1) ausgelesen werden.

12. Vorrichtung zur Datenerfassung von Daten dezentral angeordneter Datenerfassungsgeräte, mit
mindestens einem Datenerfassungsgerät (PGxy) und mindestens einer Zwischenstation (SGx), wobei
die Daten mittels des mindestens einen Datenerfassungsgeräts (PGxy) erfaßbar und über erste Kommunikationswege (4) an die mindestens eine Zwischenstation (SGx) weiterleitbar sind, und wobei
die Daten in vorbestimmbaren Zeitabständen und während eines vorbestimmbaren Zeitfensters von dem Datenerfassungsgerät (PGxy) übertragbar sind,
und
daß das mindestens eine Datenerfassungsgerät (PGxy) der mindestens einen Zwischenstation (SGx) automatisch zuordnungsbar ist, und
daß die mindestens eine Zwischenstation (SGx) nur während des vorbestimmbaren Zeitfensters und nach dem vorbestimmbaren Zeitabstand des jeweiligen der Zwischenstation (SGx) zugeordneten Datenerfassungsgeräts (PGxy) auf Datenempfang schaltet,
**dadurch gekennzeichnet,**
**daß** die Vorrichtungen mehrerer Zwischenstationen (SG1..n) aufweist, zwischen denen bidirektionale zweite Kommunikationswege (3) bestehen, und
**daß** die mehreren Zwischenstationen (SG1..n) Zuordnungsmittel zum selbständigen Aufbau eines Netzwerks (N1) aufweisen.

13. Vorrichtung nach Anspruch 12,
**dadurch gekennzeichnet,**
**daß** die Datenerfassungsgeräte (PGxy) die Daten über erste unidirektionale drahtlose Kommunikationswege (4) senden,
**daß** die Empfangspegel und die Daten der Datenerfassungsgeräte (PGxy) in den Zwischenstationen (SG1..n) meßbar, speicherbar und erfaßbar sind,
**daß** die Zwischenstationen (SG1..n) die Daten und die Empfangspegel der Datenerfassungsgeräte (PGxy) über bidirektionale zweite Kommunikationswege (3) untereinander austauschen, und
**daß** die automatische Zuordnung der jeweiligen Datenerfassungsgeräte (PGxy) zu der entsprechenden Zwischenstation (SGx) eines ersten Netzwerks (N1) aufgrund der jeweiligen Empfangspegel der Datenerfassungsgeräte (PGxy) und der Anzahl von Datenerfassungsgeräten (PGxy) pro Zwischenstation (SGx) durchführbar ist.

14. Vorrichtung nach Anspruch 12 oder 13,
**dadurch gekennzeichnet,**
**daß** das Datenerfassungsgerät (PGxy) die vorbestimmbaren Zeitabstände und die vorbestimmbaren Zeitfenster quasizufällig mittels eines Zufallsgenerators festlegt,
**daß** die vorbestimmbaren Zeitabstände und die vorbestimmbaren Zeitfenster der entsprechenden Zwischenstation (SGx) mittels eines Telekommunikationstelegramms mitteilbar sind, und
**daß** diejenige Zwischenstation (SGx), der das Datenerfassungsgerät (PGxy) zugeordnet wurde, nur während dieser vorbestimmten Zeitfenster und dieser vorbestimmten Zeitabstände auf Datenempfang schaltet.

15. Vorrichtung nach Anspruch 14,
**dadurch gekennzeichnet,**
**daß** die vorbestimmbaren Zeitabstände und die vorbestimmbaren Zeitfenster mittels einer Zahlenkombination festlegbar sind,
**daß** die Datenerfassungsgeräte (PGxy) jeweils eine individuelle Zahlenkombination mittels Telekommunikationstelegrammen senden, und
**daß** die Zwischenstationen (SGx) Mittel zur Entschlüsselung der Zahlenkombination aufweisen.

16. Vorrichtung nach einem der Ansprüche 12 - 15,
**dadurch gekennzeichnet,**
**daß** die Zwischenstationen (SGx) Mittel zur Berechnung der Zeitabstände und/oder des Zeitfensters für den Datenempfang von Daten der Datenerfassungsgeräte (PGxy) aufweisen, wobei die Berechnung über die vorbestimmten Zeitabstände bzw. die vorbestimmten Zeitfenster der der jeweiligen Zwischenstation (SGx) zugeordneten Datenerfassungsgeräte (PGxy) ggf. mittels der Entschlüsselung der Zahlenkombination einschließlich einem den zugeordneten Datenerfassungsgeräten (PGxy) eigenen Zeitfehler sowie weiterer Kriterien erfolgt.

17. Vorrichtung nach Anspruch 16,
**dadurch gekennzeichnet,**
**daß** sich die Zuordnungsmittel der Zwischenstationen (SG1..n) zum selbständigen Aufbau eines Netzwerks (N1) eine Netzwerkadresse und Geräteadressen zuordnen, indem in jedem Zuordnungsmittel einer jeden Zwischenstation (SGx) während eines Installationsmodus ein Zähler aktivierbar ist, die Zuordnungsmittel ihre Zählerstände miteinander vergleichen und das Zuordnungsmittel mit dem höheren Zählerstand dem Zuordnungsmittel mit dem niedrigeren Zählerstand für diese Zwischenstation (SGx) eine Netzwerkadresse und eine Geräteadresse zuteilt, bis sukzessive alle Zwischenstationen (SG1..n) eines Netzwerks (N1) eine Netzwerkadresse und eineindeutige Geräteadressen aufweisen.

18. Vorrichtung nach einem der Ansprüche 12 - 17,
**dadurch gekennzeichnet,**
**daß** die Datenerfassungsgeräte (PGxy) Sender und die Zwischenstationen (SGx) und die Datensammelstelle (1) Sender und Empfänger zur Funkübertragung der Daten aufweisen.

19. Vorrichtung nach einem der Ansprüche 12 - 18,
**dadurch gekennzeichnet,**
**daß** die Daten zwischen den Zwischenstationen (SGx) und/oder zwischen den Zwischenstationen (SGx) und der Datensammelstelle (1) über Funk und/oder über Bus- und/oder über Koaxialleitungen leitbar sind.

20. Verwendung eines Verfahrens nach einem der Ansprüche 1 bis 11 zur Erfassung von Verbrauchsdaten dezentral angeordneter Meßgeräte in Räumen von Gebäuden zur Messung des Verbrauchs von Wasser, Gas, Wärme oder dgl.,
**dadurch gekennzeichnet,**
**daß** die Meßdaten entsprechender Meßgeräte (PGxy) an in Etagen der Gebäude angebrachte Zwischenstationen (SGx) gesendet und diese an eine zentrale Datensammelstelle (1) zur zentralen Ablesung der Verbrauchsdaten weitergeleitet werden.

## Claims

1. Method for data capture for data on locally arranged data capture appliances, having
at least one data capture appliance (PGxy) and at least one intermediate station (SGx), wherein
the data are captured using the at least one data capture appliance (PGxy) and are forwarded via first communication channels (4) to the at least one intermediate station (SGx), and wherein
the data are transmitted from the data capture appliance (PGxy) at predeterminable time intervals and during a predeterminable time window,
and wherein the at least one data capture appliance (PGxy) is automatically associated with the at least one intermediate station (SGx), and wherein the at least one intermediate station (SGx) is switched to data reception only during the predeterminable time window and after the predeterminable time interval of the respective data capture appliance (PGxy) associated with the intermediate station (SGx), **characterized**
**in that** a plurality of intermediate stations (SG1...n) are present, between which there are bidirectional second communication channels (3), and
**in that** an explicit network address and explicit appliance addresses are associated with the plurality of intermediate stations (SG1...n) for the purpose of setting up a first network (N1).

2. Method according to Claim 1,
**characterized**
**in that** the time interval and/or the time window for data reception by the intermediate stations (SGx) is/are calculated from the predeterminable time interval and/or the predeterminable time window of the associated data capture appliance (PGxy), including a time error which is inherent in the data capture appliance (PGxy).

3. Method according to Claim 1 or 2,
**characterized**
**in that** the intermediate stations (SG1...n) of the first network (N1) associate a network address and appliance addresses with themselves independently by virtue of
a) a counter being activated in each intermediate station (SGx) during an installation mode,
b) a first intermediate station (SGx+1) and a second intermediate station (SGx+2) comparing their counter readings with one another and
c) the intermediate station with the higher counter reading assigning the network address and an appliance address to the intermediate station with the lower counter reading until progressively all intermediate stations (SG1...n) of a network have a standard network address and unique appliance addresses.

4. Method according to one of the preceding claims,
**characterized**
**in that** the data from the data capture appliances (PGxy) are sent via first unidirectional wireless communication channels (4),
**in that** the intermediate stations (SG1...n) measure or receive and store the reception levels and the data from the data capture appliances (PGxy),
**in that** the intermediate stations (SG1...n) interchange the data and reception levels from the data capture appliances (PGxy) with one another via the bidirectional second communication channels (3), and
**in that** the automatic association of the respective data capture appliances (PGxy) with the corresponding intermediate station (SGx) of the first network (N1) is performed on the basis of the respective reception levels of the data capture appliances (PGxy) and the number of data capture appliances (PGxy) per intermediate station (SGx).

5. Method according to one of the preceding claims,
**characterized in that** the data transmissions between the intermediate stations (SGx) take place only during predeterminable time windows and after predeterminable time intervals by virtue of the intermediate stations (SGx) respectively communicating the time windows and time intervals to one another, so that the intermediate stations (SGx) are switched to data reception only during predeterminable time windows and after predeterminable time intervals of other intermediate stations (SGx).

6. Method according to one of the preceding claims,
**characterized**
**in that** the data capture appliances (PGxy) automatically register with an intermediate station (SGx) during an installation mode, wherein the intermediate station (SGx) is in an installation mode and wherein each data capture appliance (PGxy) users the first unidirectional communication channels (4) to send a registration signal (AS) which is received by an intermediate station (SGx) in the installation mode.

7. Method according to Claim 6,
**characterized**
**in that** a data capture appliance (PGxy) is automatically associated with an intermediate station (SGx) of a first network (N1) in the installation mode if the reception level of the data capture appliance (PGxy) which is measured in the intermediate station (SGx) of the first network (N1) exceeds a particular minimum reception level.

8. Method according to one of the preceding claims,
**characterized**
**in that** the data are stored by at least one intermediate station (SGx) and/or are forwarded bidirectionally to a central data collection point (1) via third communication channels (2).

9. Method according to one of the preceding claims,
**characterized**
**in that** the data transmission via the unidirectional first communication channels (4) and/or the data transmission via the bidirectional second communication channels (3) and/or the data transmission via the bidirectional third communication channels (2) is/are performed wirelessly, and/or in that the data transmission via the bidirectional second communication channels (3) and/or the data transmission via the bidirectional third communication channels (2) is/are performed by wire.

10. Method according to one of the preceding claims,
**characterized**
**in that** the data from the data capture appliances (PGxy) and/or data from the intermediate stations (SGx) are stored by the intermediate stations (SGx) and are sent in the network (N1) repeatedly for a purpose and/or at random via the second communication channels (3), in particular are sent in precisely one repetition.

11. Method according to one of the preceding claims,
**characterized**
**in that** the data from the data capture appliances (PGxy) are stored by means of the intermediate stations (SGx) and are not read by a mobile data collection point (1) until at a later time.

12. Apparatus for the data capture of data from locally arranged data capture appliances, having
at least one data capture appliance (PGxy) and at least one intermediate station (SGx), wherein
the data can be captured by means of the at least one data capture appliance (PGxy) and can be forwarded to the at least one intermediate station (SGx) via first communication channels (4), and wherein
the data can be transmitted from the data capture appliance (PGxy) at predeterminable time intervals and during a predeterminable time window,
and wherein the at least one data capture appliance (PGxy) can be automatically associated with the at least one intermediate station (SGx), and
wherein the at least one intermediate station (SGx) switches to data reception only during the predeterminable time window and after the predeterminable time interval of the respective data capture appliance (PGxy) associated with the intermediate station (SGx),
**characterized**
**in that** the apparatus has a plurality of intermediate stations (SG...n), between which there are bidirectional second communication channels (3), and
**in that** the plurality of intermediate stations (SG1...n) have association means for autonomously setting up a network (N1).

13. Apparatus according to Claim 12,
**characterized**
**in that** the data capture appliances (PGxy) send the data via first unidirectional wireless communication channels (4),
**in that** the reception levels and the data from the data capture appliances (PGxy) can be measured, stored and captured in the intermediate stations (SG1...n), in that the intermediate stations (SG1...n) interchange the data and the reception levels from the data capture appliances (PGxy) with one another via bidirectional second communication channels (3), and
**in that** the automatic association of the respective data capture appliances (PGxy) with the corresponding intermediate station (SGx) of a first network (N1) can be performed on the basis of the respective reception levels of the data capture appliances (PGxy) and the number of data capture appliances (PGxy) per intermediate station (SGx).

14. Apparatus according to Claim 12 or 13,
**characterized**
**in that** the data capture appliance (PGxy) stipulates the predeterminable time intervals and the predeterminable time windows quasi-randomly using a random number generator,
**in that** the predeterminable time intervals and the predeterminable time windows of the relevant intermediate station (SGx) can be communicated by means of a telecommunication message, and
**in that** the intermediate station (SGx) with which the data capture appliance (PGxy) has been associated switches to data reception only during this predetermined time window and these predetermined time intervals.

15. Apparatus according to Claim 14,
**characterized**
**in that** the predeterminable time intervals and the predeterminable time windows can be stipulated by means of a numerical combination,
**in that** the data capture appliances (PGxy) respectively send an individual numerical combination by means of telecommunication messages, and
**in that** the intermediate stations (SGx) have means for decrypting the numerical combination.

16. Apparatus according to one of Claims 12 - 15,
**characterized**
**in that** the intermediate stations (SGx) have means for calculating the time intervals and/or the time window for the data reception of data from the data capture appliances (PGxy), wherein the calculation over the predetermined time intervals or the predetermined time windows of the data capture appliances (PGxy) associated with the respective intermediate station (SGx) is possibly effected by decrypting the numerical combination, including a time error which is inherent in the associated data capture appliances (PGxy), and also further criteria.

17. Apparatus according to Claim 16,
**characterized**
**in that** the association means of the intermediate stations (SG1...n) associate a network address and appliance addresses with themselves for the purpose of autonomously setting up a network (N1) by virtue of a counter being able to be activated in each association means of each intermediate station (SGx) during an installation mode, the association means comparing their counter readings with one another, and the association means with the higher counter reading assigning a network address and an appliance address to the association means with the lower counter reading for this intermediate station (SGx) until progressively all intermediate stations (SG1...n) of a network (N1) have a network address and unique appliance addresses.

18. Apparatus according to one of Claims 12 - 17,
**characterized**
**in that** the data capture appliances (PGxy) have transmitters and the intermediate stations (SGx) and the data collection point (1) have transmitters and receivers for the radio transmission of the data.

19. Apparatus according to one of Claims 12 - 18,
**characterized**
**in that** the data can be routed between the intermediate stations (SGx) and/or between the intermediate stations (SGx) and the data collection point (1) by radio and/or by bus lines and/or by coaxial lines.

20. Use of a method according to one of Claims 1 to 11 for the capture of consumption data from locally arranged meters in rooms in buildings for measuring the consumption of water, gas, heat or the like,
**characterized in that**
the measurement data from appropriate meters (PGxy) are sent to intermediate stations (SGx) fitted on floors of the buildings and are forwarded to a central data collection point (1) for central reading of the consumption data.

## Revendications

1. Procédé de saisie de données, de données provenant d'appareils de saisie de données disposés de manière décentralisée, avec au moins un appareil de saisie de données (PGxy) et au moins une station intermédiaire (SGx),
- les données étant saisies au moyen de l'au moins un appareil de saisie de données (PGxy) et retransmises à l'au moins une station intermédiaire (SGx) via des premières voies de communication (4) et
- les données étant transmises par l'appareil de saisie de données (PGxy) à des intervalles de temps prédéterminables et pendant une fenêtre de temps prédéterminable et
- l'au moins un appareil de saisie de données (PGxy) étant associé automatiquement à l'au moins une station intermédiaire (SGx) et
- l'au moins une station intermédiaire (SGx) n'étant commutée sur la réception de données que pendant la fenêtre de temps prédéterminable et après l'intervalle de temps prédéterminable de l'appareil de saisie de données (PGxy) respectif associé à la station intermédiaire (SG2), **caractérisé en ce que**
- plusieurs stations intermédiaires (SG1 ... n) sont présentes, entre lesquelles existent des deuxièmes voies de communication bidirectionnelles (3) et
- une adresse réseau univoque et des adresses d'appareil univoques sont assignées aux plusieurs stations intermédiaire (SG1 ... n) pour l'établissement d'un premier réseau (N1).

2. Procédé selon la revendication 1, **caractérisé en ce que** l'intervalle de temps et/ou la fenêtre de temps pour la réception de données des stations intermédiaires (SGx) sont calculés à partir de l'intervalle de temps prédéterminable resp. de la fenêtre de temps prédéterminable de l'appareil de saisie de données (PGxy) associé incluant une erreur de temps spécifique à l'appareil de saisie de données (PGxy).

3. Procédé selon la revendication 1 ou 2, **caractérisé en ce que** les stations intermédiaires (SG1 ... n) du premier réseau (N1) s'affectent de manière autonome une adresse réseau et des adresses d'appareil
a) par activation d'un compteur dans chaque station intermédiaire (SGx) pendant un mode d'installation,
b) par le fait qu'une première station intermédiaire (SGx+1) et une deuxième station intermédiaire (SGx+2) comparent entre elles leurs états de compteur et
c) par le fait que la station intermédiaire dont l'état du compteur est supérieur assigne l'adresse réseau et une adresse d'appareil à la station intermédiaire dont l'état du compteur est inférieur jusqu'à ce que toutes les stations intermédiaires (SG1 ... n) d'un réseau présentent successivement une adresse réseau uniforme et des adresses d'appareil biunivoques.

4. Procédé selon l'une des revendications précédentes, **caractérisé en ce que**
- les données sont émises par les appareils de saisie de données (PGxy) via des premières voies de communication sans fil unidirectionnelles (4),
- les stations intermédiaires (SG1 ... n) mesurent resp. reçoivent et mettent en mémoire les niveaux de réception et les données des appareils de saisie de données (PGxy),
- les stations intermédiaires (SG1 ... n) échangent entre elles les données et les niveaux de réception des appareils de saisie de données (PGxy) via les deuxièmes voies de communication bidirectionnelles (3) et
- l'association automatique des appareils de saisie de données respectifs (PGxy) à à station intermédiaire correspondante (SGx) du premier réseau (N1) est effectuée sur la base des niveaux de réception respectifs des appareils de saisie de données (PGxy) et du nombre d'appareils de saisie de données (PGxy) par station intermédiaire (SGx).

5. Procédé selon l'une des revendications précédentes, **caractérisé en ce que** les transmissions de données entre les stations intermédiaires (SGx) ont lieu uniquement pendant des fenêtres de temps prédéterminables et après des intervalles de temps prédéterminables, par le fait que les stations intermédiaires (SGx) se communiquent respectivement les fenêtres de temps et les intervalles de temps de sorte que les stations intermédiaires (SGx) ne sont commutées sur la réception de données que pendant des fenêtres de temps prédéterminables et après des intervalles de temps prédéterminables d'autres stations intermédiaires (SGx).

6. Procédé selon l'une des revendications précédentes, **caractérisé en ce que** les appareils de saisie de données (PGxy) se déclarent autonomement à une station intermédiaire (SGx) pendant un mode d'installation, la station intermédiaire (SGx) se trouvant dans un mode d'installation et chaque appareil de saisie de données (PGxy) émettant, via les premières voies de communication unidirectionnelles (4), un signal de déclaration (AS) qui est reçu par une station intermédiaire (SGx) en mode d'installation.

7. Procédé selon la revendication 6, **caractérisé en ce qu'**un appareil de saisie de données (PGxy) est associé automatiquement à une station intermédiaire (SGx) d'un premier réseau (N1) en mode d'installation lorsque le niveau de réception de l'appareil de saisie de données (PGxy) mesuré dans la station intermédiaire (SGx) du premier réseau (N1) dépasse un niveau de réception minimal déterminé.

8. Procédé selon l'une des revendications précédentes, **caractérisé en ce que** les données sont stockées par au moins une station intermédiaire (SGx) et/ou retransmises de manière bidirectionnelle via des troisièmes voies de communication (2) à un point central de collecte de données (1).

9. Procédé selon l'une des revendications précédentes, **caractérisé en ce que** la transmission de données via les premières voies de communication unidirectionnelles (4) et/ou la transmission de données via les deuxièmes voies de communication bidirectionnelles (3) et/ou la transmission de données via les troisièmes voies de communication bidirectionnelles (2) sont effectuées sans fil et/ou **en ce que** la transmission de données via les deuxièmes voies de communication bidirectionnelles (3) et/ou la transmission de données via les troisièmes voies de communication bidirectionnelles (2) est effectuée par fil.

10. Procédé selon l'une des revendications précédentes, **caractérisé en ce que** les données des appareils de saisie de données (PGxy) et/ou les données des stations intermédiaires (SGx) sont mises en mémoire par les stations intermédiaires (SGx) et envoyées dans le réseau (N1) à plusieurs reprises, de manière ciblée et/ou non ciblée, via les deuxièmes voies de communication (3), et sont plus particulièrement envoyées de manière répétée une fois exactement.

11. Procédé selon l'une des revendications précédentes, **caractérisé en ce que** les données des appareils de saisie de données (PGxy) sont mises en mémoire au moyen des stations intermédiaires (SGx) et ne sont extraites qu'à un instant ultérieur par un point mobile de collecte de données (1).

12. Dispositif de saisie de données, de données provenant d'appareils de saisie de données disposés de manière décentralisée, avec au moins un appareil de saisie de données (PGxy) et au moins une station intermédiaire (SGx),
- les données pouvant être saisies au moyen de l'au moins un appareil de saisie de données (PGxy) et retransmises à l'au moins une station intermédiaire (SGx) via des premières voies de communication (4) et
- les données pouvant être transmises par l'appareil de saisie de données (PGxy) à intervalles de temps prédéterminables et pendant une fenêtre de temps prédéterminable et
- l'au moins un appareil de saisie de données (PGxy) pouvant être associé automatiquement à l'au moins une station intermédiaire (SGx) et
- l'au moins une station intermédiaire (SGx) ne se commutant sur la réception de données que pendant la fenêtre de temps prédéterminable et après l'intervalle de temps prédéterminable de l'appareil de saisie de données (PGxy) respectif associé à la station intermédiaire (SGx), **caractérisé en ce que**
- le dispositif comporte plusieurs stations intermédiaires (SG1 ... nu entre lesquelles existent des deuxièmes voies de communication bidirectionnelles (3) et
- les plusieurs stations intermédiaire (SG1 ... n) comportent des moyens d'association pour l'établissement autonome d'un réseau (N1).

13. Dispositif selon la revendication 12, **caractérisé en ce que**
- les appareils de saisie de données (PGxy) émettent les données via des premières voies de communication sans fil unidirectionnelles (4),
- les niveaux de réception et les données des appareils de saisie de données (PGxy) peuvent être mesurés, mils en mémoire et saisis dans les stations intermédiaires (SG1 ... n),
- les stations intermédiaires (SG1 ... n) échangent entre elles les données et les niveaux de réception des appareils de saisie de données (PGxy) via des deuxièmes voies de communication bidirectionnelles (3) et
- l'association automatique des appareils de saisie de données respectifs (PGxy) à la station intermédiaire correspondante (SGx) d'un premier réseau (N1) peut être effectuée sur la base des niveaux de réception respectifs des appareils de saisie de données (PGxy) et du nombre d'appareils de saisie de données (PGxy) par station intermédiaire (SGx).

14. Dispositif selon la revendication 12 ou 13, **caractérisé en ce que**
- l'appareil de saisie de données (PGxy) détermine les intervalles de temps prédéterminables et les fenêtres de temps prédéterminables de manière quasi aléatoire au moyen d'un générateur aléatoire,
- les intervalles de temps prédéterminables et les fenêtres de temps prédéterminables de la station intermédiaire correspondante (SGx) peuvent être communiqués au moyen d'un télégramme de télécommunication et
- la station intermédiaire (SGx) à laquelle l'appareil de saisie de données (PGxy) a été associé se commute sur la réception de données uniquement pendant ces fenêtres de temps prédéterminées et ces intervalles de temps prédéterminés.

15. Dispositif selon la revendication 14, **caractérisé en ce que**
- les intervalles de temps prédéterminables et les fenêtres de temps prédéterminables peuvent être fixés au moyen d'une combinaison de chiffres,
- les appareils de saisie de données (PGxy) émettent respectivement une combinaison de chiffres individuelle au moyen de télégrammes de télécommunication et
- les stations intermédiaires (SGx) comportent des moyens de décryptage de la combinaison de chiffres,

16. Dispositif selon l'une des revendications 12 à 15, **caractérisé en ce que**
- les stations intermédiaires (SGx) comportent des moyens pour calculer les intervalles de temps et/ou la fenêtre de temps pour la réception de données des appareils de saisie de données (PGxy), le calcul étant effectué par l'intermédiaire des intervalles de temps prédéterminés resp. des fenêtres de temps prédéterminées des appareils de saisie de données (PGxy) associés à la station intermédiaire respective (SGx), le cas échéant au moyen du décryptage de la combinaison de chiffres, incluant une erreur de temps spécifique aux appareils de saisie de données associées (PGxy) ainsi que d'autres critères.

17. Dispositif selon la revendication 16, **caractérisé en ce que** les moyens d'association des stations intermédiaires (SG1 ... n) s'affectent une adresse réseau et des adresses d'appareil pour l'établissement autonome d'un réseau (N1) par le fait qu'un compteur peut être activé dans chaque moyen d'association de chaque station intermédiaire (SGx) pendant un mode d'installation, que les moyens d'association comparent entre eux leurs états de compteur et que le moyen d'association dont l'état du compteur est supérieur assigne au moyen d'association dont l'état du compteur est inférieur, pour cette station intermédiaire (SGx), une adresse réseau et une adresse d'appareil, jusqu'à ce que toutes les stations intermédiaires (SG1 ... n) d'un réseau (N1) présentent successivement une adresse réseau et des adresses d'appareil biunivoques.

18. Dispositif selon l'une des revendications 12 à 17, **caractérisé en ce que** les appareils de saisie de données (PGxy) comportent des émetteurs, et les stations intermédiaires (SGx) et le point de collecte de données (1), des émetteurs et des récepteurs pour la transmission radio des données.

19. Dispositif selon l'une des revendications 12 à 18, **caractérisé en ce que** les données peuvent être transmises, entre les stations intermédiaires (SGx) et/ou entre les stations intermédiaires (SGx) et le point de collecte de données (1), par radio et/ou via des lignes de bus et/ou via des lignes coaxiales.

20. Utilisation d'un procédé selon l'une des revendications 1 à 11 pour saisir des données de consommation d'appareils de mesure disposés de manière décentralisée dans des pièces de bâtiments pour la mesure de la consommation d'eau, de gaz, de chaleur ou autres similaires, **caractérisée en ce que** les données de mesure d'appareils de mesure correspondants (PGxy) sont envoyées à des stations intermédiaires (SGx) situées à des étages des bâtiments et celles-ci sont retransmises à un point central de collecte de données (1) pour le relevé central des données de consommation.
